# EUROPEAN PATENT APPLICATION

(11) **EP 3 106 936 A1**
(43) Date of publication of application: **21.12.2016**
(21) Application number: 15172743.5
(22) Date of filing: 18.06.2015
(51) Int. Cl.: G05B 15/02, G05B 13/02

(54) **FARM ENERGY MANAGEMENT**

(71) Applicant: ABB Technology AG, 8050 Zürich (CH)
(72) Inventor: Mahieux, Céline, 5400 Baden (CH); Hemrle, Jaroslav, 5405 Baden-Dättwil (CH); Mercangoez, Mehmet, 4332 Stein (CH)
(74) Representative: ABB Patent Attorneys

(57) **Abstract**

The present invention is concerned with energy management of a remote farm or rural agricultural community with no or limited access to a main electrical grid. According to the invention, an innovative use of a multi-grid system for the provision of electricity, water, and thermal energy for heating and cooling needs is proposed for farms and farming communities. The existence of at least one continual stream or flow of material in a network different from but interacting with an electrical microgrid is exploited in view of a flexible storage of energy beyond a conventional perimeter of the microgrid and without reconversion of the stored energy into electrical energy. Optimal operation of the microgrid may then be achieved by scheduling or planning electrical power generation within the farm in conjunction with farming related loads that likewise represent a time-wise degree of freedom.

## Description

### FIELD OF THE INVENTION

The invention relates to the field of energy management of remote farms or rural agricultural communities with no or limited access to a main electrical grid.

### BACKGROUND OF THE INVENTION

Farms and farming communities are potential users of microgrid technologies due to the fact that they are spread out towards remote locations away from a main or central grid. In an extended view these users require not only electricity but also a reliable system for water, cooling and heating for the various agricultural purposes, which in most circumstances are linked together for example via the use of electrical power for pumping water or for running refrigeration equipment. Even in grid connected farms there is interest for having a more reliable and capable power infrastructure due to the seasonal importance of having the power at the right time window for example for irrigation, harvesting, processing, and preservation of the produce to avoid losses and also due to the need to power large pieces of equipment.

The need for large initial capital investment is a big hurdle in infrastructure projects for farms, farming communities and for rural agricultural populations. Agricultural loads have a seasonal and intermittent profile e.g. the irrigation pumps do not need to run all the time and auxiliary loads such as cooling are only needed during harvest seasons. This results in the corresponding infrastructure having a low capacity factor.

The patent application US 20130024014 A1 discloses a method of improving an energy efficiency of a farm micro-grid system including a generation of biogas from livestock waste for firing an internal combustion engine, gas boiler, or absorption chiller. The method involves generating a comprehensive cooling, heating, and power (CCHP) micro-grid model with an electrical and thermal part. A multi-objective optimization including periodic operating cost minimization is performed on a computer with the CCHP model and based on mixed integer non-linear programming.

The paper by Y. Levron et al., entitled "Optimal power flow in microgrids with energy storage", IEEE Transactions on Power Systems, 28(3):3226-3234, 2013, discloses an optimal power flow solution that considers the entire system: the storage device limits, voltage limits, current limits, and power limits. The physical connectivity of the power microgrid is taken in to account by way of an operating limit or power transmission capacity of the microgrid.

### DESCRIPTION OF THE INVENTION

It is an objective of the invention to improve an energy management of a remote farm or rural agricultural community with no or limited access to a main electrical grid. This objective is achieved by a method and a farm energy management system according to the independent claims. Preferred embodiments are evident from the dependent patent claims.

According to the invention, an innovative use of a multi-grid system for the provision of electricity, water, and thermal energy for heating and cooling needs is proposed for farms and farming communities. The existence of at least one continual stream or flow of material in a network different from but interacting with an electrical microgrid is exploited in view of a flexible storage of energy beyond a conventional perimeter of the microgrid and without reconversion of the stored energy into electrical energy. Optimal operation of the microgrid may then be achieved by scheduling or planning electrical power generation within the farm in conjunction with farming related loads that likewise represent a time-wise degree of freedom. In fact, farming related loads or farm tasks, together with corresponding energy storage possibilities, may provide for time-wise flexibility and become amenable to an integrated farm-wide scheduling process. The increased scheduling flexibility in turn is only subject to, or being moderated by, the operational limits of the underlying electrical microgrid and, optionally, of the material flow network.

Specifically, a system for managing production, storage, and consumption of energy in a farm or other remote agricultural community comprises a network with means for transport and storage of a material facilitating successful farm operation. The system comprises an electrical microgrid optionally connectable to a main electrical grid and interconnecting electrical power generating resources and electrically powered equipment for processing the material in view of a farm task or work-package. The network includes a storage for storing the processed material before being used, without further processing by the equipment, in executing the farm task. The material may be a fluid being pumped or compressed, and the storage of the processed fluid may be considered as a storage of converted electrical energy in view of a later use in connection with the farm task. A method of managing farm energy then comprises the steps of
- Providing an electricity demand and a time-frame for processing, by the equipment, an amount of material required for a forthcoming, time-delimited farm task instance or work-package. The electricity demand may include a minimum and/or maximum total energy as well as a minimum and/or maximum power, while the time-frame may include a start time and/or a completion time not to be exceeded.
- Determining an optimum equipment operation schedule for converting the demanded electrical energy into processed material within the limits of the provided time-frame. The optimum schedule may minimize non-renewable fuel consumption in an island mode of the microgrid without exchange of electrical energy with a main grid, or maximize power export to the main grid in a grid-connected mode of the microgrid. The determination of the optimum schedule is respective of an operating limit or power transmission capacity of the microgrid from a resource and/or towards the equipment, and may include a corresponding limit as a hard constraint not to be exceed in the execution of the schedule. Optionally, an operating limit of the material flow network and/or a material storage capacity may also be observed.
- Operating the equipment according to the optimum schedule and storing the processed material in the storage.
- Performing the farm task using the stored processed material once the processing of the amount of material has been completed.

In preferred embodiments, the material is a fluid such as irrigation water, heating and cooling working fluid, steam, or seawater, and the network is a piping circuit for the fluid. The equipment for processing the fluid includes a water pump for pumping the irrigation water to a water storage such as a reservoir or water tower, a heat pump for generating heating power, a refrigerator or chiller or absorber for generating cooling power, a compressor for producing compressed steam, or equipment for desalination, purification, or other treatment of seawater. In these embodiments, converted electrical energy is stored in the network as gravitational energy in an irrigation water tower, as thermal energy in a Thermal Energy Storage (TES) for heating or cooling purposes, as kinetic energy in pressurized steam for pasteurization, or as desalinated, purified, or otherwise treated water for farm use.

In another preferred embodiment, an Anaerobic Digestion (AD) plant is provided using solid animal waste from the dairy, beef and pig herds or using agricultural waste, energy crops or food residues to produce biogas. The network is a solid feedstock circuit possibly including conveyer belts and the equipment includes a macerator or other pre-treatment equipment for grinding the solid waste material to be fed to the AD. The AD operates optimally at a certain process temperature that in turn may be maintained by means of the heating circuit.

In an advantageous embodiment of the invention, a user indicates to the system a real load, either spontaneously or on a recurring basis, rather than a corresponding electrical load. For instance, the real load may be a specific volume of irrigation water to be available at a certain location within a certain time interval, or a quantity of milk or other produce to be cooled, or a process temperature to be maintained in a particular animal shed. The indicated amount will then be converted to an energy demand, based on a model, which contributes to a more intuitive and thus efficient use of the energy management system.

In an advantageous embodiment of the invention, the electrical power generating resources include intermittent Distributed Energy Resources DER, specifically renewable energy resources based on solar and wind power, in addition to or in place of biofuel or fossil fuel powered DER. The determination of the optimum equipment operation schedule then takes into account an availability of the intermittent power generating resource as per a corresponding time-resolved maximum power generation forecast for a suitable forecast period. In particular, if water towers are available in fluidal proximity to certain crop fields irrigation water may be pre-pumped into the water towers the previous mid-day using available solar energy to meet the early morning irrigation water need on the next day.

In an advantageous embodiment of the invention, the equipment is accessible to two or more economically independent users, such as two neighbouring farmers sharing a pump for irrigation purposes. The schedule is determined based on demands in electrical energy and time frames for operating the equipment as derived from corresponding requests received concurrently from the two users. Optimized shared operation of the available equipment and resources is expected to increase the capacity factors of all the utilized equipment and to ultimately reduce a total cost for each individual of the participating users. An intuitive platform facilitating the collaborative participation, together with an optional metering system, may support the acceptance and use of an integrated supervisory system. In addition to adjacent farming or agricultural users with a similar load demand, infrastructure may also be shared with community users or rural households that present a more distinct load demand.

In an advantageous embodiment of the invention, the microgrid is operating in island mode, without connection to a main grid. On the other hand, large industrial farms which do have access to the main grid may also benefit from a microgrid as described in the foregoing, not least for improved availability and lower cost of electricity.

### BRIEF DESCRIPTION OF THE DRAWINGS

The subject matter of the invention will be explained in more detail in the following text with reference to preferred exemplary embodiments which are illustrated in the attached drawings, in which:
Fig.1 shows a farm energy system with a microgrid, feedstock circuit, and water circuit;
Fig.2 shows a farm energy system with a heating water circuit;
Fig.3 shows a farm energy system with a cooling water circuit; and

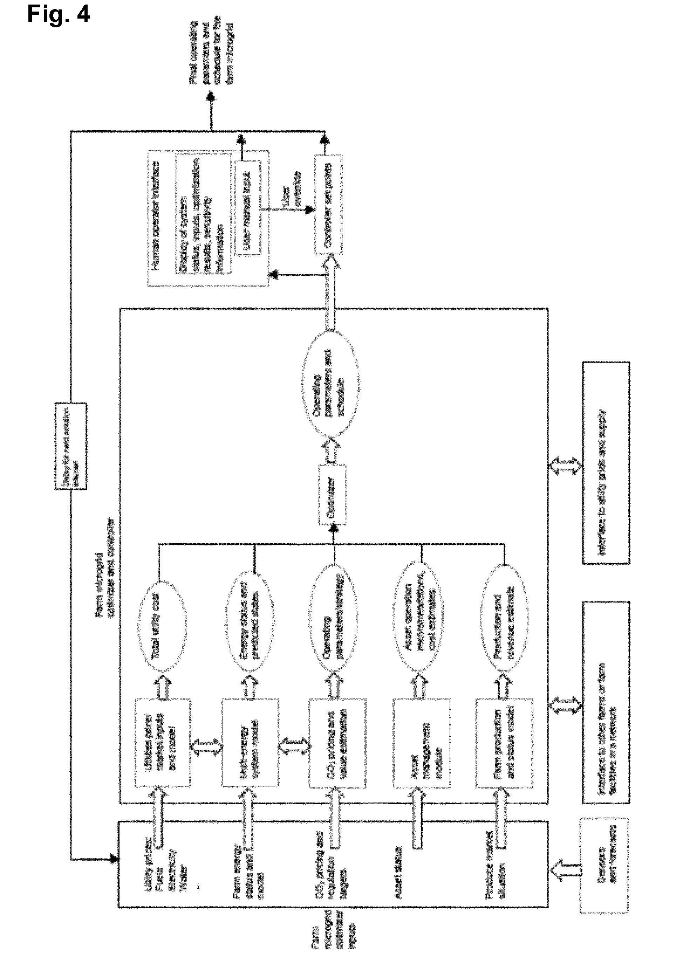

Fig.4 shows information flow and interfaces of a farm energy management system.

### DETAILED DESCRIPTION OF PREFERRED EMBODIMENTS

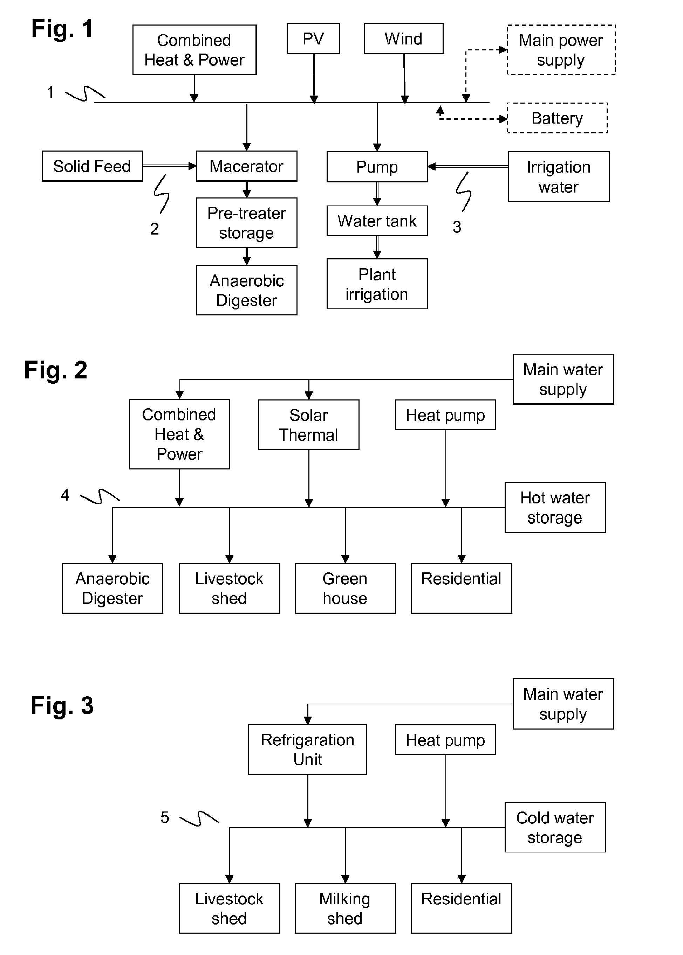

Fig.1 shows a farm energy system with a microgrid 1 to which are connected a number of Distributed Energy Resources DER including a Combined Heat & Power CHP unit, a photovoltaic generator PV, and a wind turbine. The microgrid may be connected to a main power grid and optionally a battery for storing electrical energy. The microgrid provides electrical energy to a macerator of a solid feedstock circuit 2 from which pre-treated waste is moved to a storage before being fed to an Anaerobic Digester AD. The microgrid likewise provides electrical energy to a pump of an irrigation water circuit 3, which pumps water to a water tank for subsequent irrigation of farm crops.

The DER, macerator and pump may be connected to the microgrid by means of power electronic converters, and the microgrid may be a DC distribution system suitable for interconnecting multiple sources and loads. Other sources of electrical energy such as a biogas based fuel cell may be present in the farm energy system. Further electrical loads including actuators for drying or UHT treatment of produce may be provided as schedulable equipment in a network or flow of storable farming material.

Fig.2 depicts a heating circuit 4 as a further example of a network or flow of material. The CHP unit, a solar thermal unit, and a heat pump produce heating power in the form of hot water that may be stored in a hot water storage tank. The hot water may be used for heating the AD, a livestock shed, a greenhouse, or residential buildings. The connection of the heat pump as an electrical load to the microgrid has been omitted in the figure.

Fig.3 depicts a cooling circuit 5 as a further example of a thermal network around the farm. A refrigeration unit, a chiller or the heat pump may produce cooling capacity to be stored as cold water of a few °C for subsequent use for dairy chilling in the milking shed, or for cooling of buildings. Again, the microgrid powering the refrigeration unit or heat pump has been omitted in the figure.

Further aspects relate to a representation of the scheduling problem from a multi-participant point and setting-up of a flexible interface for participating farmers or individuals. Here the main idea is to enable maximum capacity utilization and the key ingredient is a smart phone based interface, where the participating farmers can select the type of service they would like to access from corresponding icons and use a touch and slide type interaction to specify the load and preferred timing.

Another aspect relates to fully integrating energy management (EMS), monitoring, metering, and billing functions into the same system. The user interface in the previous point is extended to include information regarding the consumption profiles for water, electricity, heat and cold as historical plots, which the farmers can also use for improving their farming practices. The information can be used to generate bills for the users but also in the case of a system operator to assess the financial performance of the complete system or the subsystem for which they are responsible. The "fully integrated" keyword also represents a connection with the scheduling and optimization algorithms, where, for example, a participating farmer can enter limits regarding consumption profiles or simply financial limits for certain billing durations, which are then converted to mathematical constraints.

The presence of a supervisory control, optimization, monitoring, and metering system also entails that an underlying automation, control, and protection functionality is present with sufficient instrumentation for receiving measurements and sufficient actuation to carry out the optimal operating strategies.

The multi-grid system in consideration can include fossil or biofuel fired Combined Heat and Power (CHP) generators, renewable power sources, Energy Storage Systems (ESS), Thermal Energy Storage (TES) and water storage systems either in water towers or as desalinated water in case water purification is also part of the operations. If diesel or biofuels are used an inventory or storage of fuels should also be taken into account. If Anaerobic Digesters (AD) are present AD feed inventory should also be considered. Various energy conversion models may be present in an optimization solution as well as the availability and cost of the input resource. In case of renewable resources means to obtain forecasts for the considered optimization period is assumed to be available. It could be an advantage to formulate and implement the optimization in a receding horizon fashion and consider recourse actions. User requests can be represented as part of an objective function or also as constraints, with a main objective of minimizing operating costs or alternatively maximizing microgrid revenues for a system operator. The system may have different interfaces for the participating users (preferably mobile/smartphone/tablet apps) and the system operator (preferably web based interface in addition to mobile/smartphone/tablet apps). The optimization results will be load schedules (percent load or range for a given duration in a grid in time) for various elements in the system ranging from water pumps, to ADs and AD pretreatment units, heat-pumps, refrigerators, irrigation vanes, charge discharge rates for TES and ESS units. There may be means for system operators to manually override the automatically generated load schedules but otherwise the supervisory system will have the capability to function in an autonomous way. The supervisory control system may have the means to be aware of the functional state of the various equipment, monitor the functional state, and consider in the optimization the functional state to optimize load distributions (e.g. higher loading of more efficient machines compared to lower efficiency ones) or balance operating hours. Impact of operating decisions on the assets can be modeled and the effect can be taken into account in the objective function e.g. the aging of diesel generators due to thermal stress from start-stop cycles or aging of ESS from charge/discharge cycles.

The optimum equipment operation schedule may minimize non-renewable fuel consumption in an island mode of the microgrid without exchange of electrical energy with a main grid. The optimum schedule may be based on an objective function of a weighted balance between cost of operation, degree of satisfaction of demand requests, or environmental impact. A prioritization such as first satisfy all user requests, then minimize operating costs, then minimize environmental impact, is likewise possible. The capacity consideration of the microgrid may be supplemented by maximum and minimum operating limits of the individual energy generation, conversion, and storage units.

The scope of the invention also extends to cases, where a connection with a main or central electricity grid is also present. In such cases an export of excess electrical energy generated from biomass or biogas combustion or from excess renewable sources is possible. Equally possible is also an import of electrical energy during a local shortage or during periods of very low electricity price, especially if ESS facilities are available on the local microgrid. In a further extended case farming operations and loads can participate in a demand response program of the central grid. Certain loads on farms e.g. the pretreatment grinding/crushing machinery for ADs are flexible and operate in a batch-wise manner, and hence may be activated to assist in absorbing excess energy from the central grid.

While the invention has been described in detail in the drawings and foregoing description, such description is to be considered illustrative or exemplary and not restrictive. Variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. The mere fact that certain elements or steps are recited in distinct claims does not indicate that a combination of these elements or steps cannot be used to advantage, specifically, in addition to the actual claim dependency, any further meaningful claim combination shall be considered disclosed.

## Claims

1. A method of managing energy in a farm with a network for transporting a material, with a microgrid interconnecting electrical power generating resources and electrically powered equipment for processing the material, and with a storage for storing processed material, the method comprising
- providing a demand in electrical energy and a time frame for processing, by the equipment, an amount of material required for a farm task;
- determining an optimum equipment operation schedule for processing the material according to the demand and the time-frame, and based on a capacity of the microgrid;
- operating the equipment according to the optimum schedule and storing the processed material in the storage, and
- performing the farm task using the processed material.

2. The method of claim 1, wherein the material is irrigation water, wherein the network is a piping circuit, and wherein the equipment includes a pump for pumping the irrigation water to a water reservoir, comprising
- providing an electrical energy demand for pumping an amount of irrigation water to a water reservoir for subsequent irrigation of farm crops.

3. The method of claim 1, wherein the material is heating or cooling working fluid, wherein the network is a heating or cooling working fluid circuit, and wherein the equipment includes one of a heat pump, a refrigerator, a chiller, and an absorber, comprising
- providing an electrical energy demand for producing an amount of heating or cooling capacity for subsequent heating or cooling of farm buildings or produce.

4. The method of claim 1, wherein the material includes solid animal or agricultural waste, wherein the network includes a solid feedstock circuit and wherein the equipment includes a macerator for grinding the material to be fed to an Anaerobic Digester AD for producing biogas, comprising
- providing an electrical energy demand for pre-treating an amount of solid waste available at the macerator.

5. The method of one of claims 1 to 4, comprising
- indicating an amount of material to be processed; and
- estimating the electrical energy demand from the indicated amount.

6. The method of one of claims 1 to 5, wherein the electrical power generating resource is an intermittent resource, comprising
- providing an electrical power production capacity forecast of the intermittent resource, and
- determining the optimum schedule based on the forecast.

7. The method of one of claims 1 to 6, wherein the equipment is being accessible to a plurality of independent users, comprising
- receiving requests from two users for operating the equipment, and
- determining the optimum schedule based on the two requests.

8. A use of the method of one of claims 1 to 7 for managing energy in a farm with an electrical microgrid operating in island mode.

9. A farm energy management system for managing energy in a farm with a network for transporting a material, with a microgrid interconnecting electrical power generating resources and electrically powered equipment for processing the material, and with a storage for storing processed material, the system including
- an interface for receiving a demand in electrical energy and a time frame for processing, by the equipment, an amount of material required for a farm task;
- a scheduling controller for determining an optimum equipment operation schedule for processing the material according to the demand and the time-frame, and based on a capacity of the microgrid; and
- communication means for communicating with an equipment controller, to operate the equipment according to the optimum schedule, store the processed material in the storage, and perform the farm task using the processed material.
